# EUROPÄISCHE PATENTSCHRIFT

(11) **EP 0 663 419 B1**
(45) Veröffentlichungstag und Bekanntmachung des Hinweises auf die Patenterteilung: **22.10.1997**
(21) Anmeldenummer: 95100109.8
(22) Anmeldetag: 05.01.1995
(51) Int. Cl.: C08J 5/12, C09J 133/12, C09J 11/06, C08L 33/12

(54) **Klebmittel für Methacrylesterkunststoffe**
Adhesive for methacryl ester plastics
Adhésif pour matières synthétiques à base d'ester de l'acide méthacrylique

(30) Priorität: 17.01.1994 DE 4401160
(43) Veröffentlichungstag der Anmeldung: 19.07.1995
(73) Patentinhaber: Röhm GmbH, 64293 Darmstadt (DE)
(72) Erfinder: Blumenschein, Michael, D-64625 Bensheim (DE); Müller, Michael, Dr., D-64625 Bensheim (DE)

(56) Entgegenhaltungen:
- EP-A- 0 000 867
- GB-A- 567 098
- GB-A- 726 690
- US-A- 4 687 798

## Beschreibung

Die Erfindung betrifft Klebmittel für Methacrylesterkunststoffe in Form von flüchtigen organischen Flüssigkeiten oder in Form von Kleblacken, die aus einer Lösung eines Polymerisats in einer solchen Flüssigkeit bestehen.

### Stand der Technik

Aus EP-B 867 sind Klebmittel für Methacrylesterkunststoffe mit einem Gehalt an Nitromethan oder Nitroethan bekannt. Optimale Klebeigenschaften haben Gemische von Nitromethan und Dichlormethan.

### Aufgabe und Lösung

Dichlormethan und andere Chlorkohlenwasserstoff gelten als toxisch und carcinogen. Daher besteht ein Bedarf an einem Klebmittel für Methacrylesterkunststoffe, das frei von Chlorkohlenwasserstoffen ist, aber vergleichbare Eigenschaften wie Nitromethan-Dichlormethan-Gemische hat. Gefordert werden kurze Anlösezeiten und niedrige Spannungsrißkorrosion sowie geringe Toxizität. Es wurde gefunden, daß niedere Alkylformiate diese Aufgabe erfüllen.

Gegenstand der Erfindung ist daher die Verwendung eines niederen Alkylformiats als Klebmittel oder als Zusatz zu flüchtigen Klebmittelgemischen oder als Zusatz zu Kleblacken zum Verkleben von Teilen aus Methacrylesterkunststoffen untereinander oder mit anderen Kunststoffen. Ein bevorzugter Gegenstand der Erfindung besteht im Einsatz eines Gemisches aus wenigstens 15 Gew.-% eines niederen Alkylformiats und bis zu 85 Gew.-% anderer flüchtiger, von Chlorkohlenwasserstoffen freier organischer Flüssigkeiten mit einem Siedepunkt nicht über 200°C, insbesondere Nitromethan und/oder Nitroethan.

Beim Anlösevorgang übt die anquellende Kunststoffoberfläche einen erheblichen Quellungsdruck auf die darunterliegende Materialschicht aus, was zu Rißbildung führen kann. Die erfindungsgemäßen Klebmittel haben die überraschende Wirkung, daß Quell-, Erweichungs- und Lösevorgänge so ineinandergreifen, daß die Rißbildung weitgehend unterdrückt wird und entstehende Risse zum großen Teil durch die Wirkung des Klebmittels wieder geschlossen werden. Wenn auch nicht alle vorteilhaften Eigenschaften der bekannten Nitromethan-Dichlormethan-Gemische erreicht werden, stellen die erfindungsgemäßen Klebmittel wegen des völligen Verzichts auf Chlorkohlenwasserstoffe und wegen einer verbesserten Festigkeit der Klebverbindungen einen wichtigen Fortschritt auf dem Gebiet der Verklebung von Methacrylesterkunststoffen dar.

### Flüchtige Klebmittel

sind solche, bei denen die angelöste Kunststoffoberfläche die Verklebung bewirkt, während das Klebmittel vollständig wieder verdunstet. Sie eignen sich zum Verkleben von formgenau aneinander passenden Teilen. Vorteilhaft haben sie Siedepunkte von 30 bis 150°C (bei Normaldruck). Unter den erfindungsgemäß eingesetzten Alkylformiaten liegen Methyl-, Ethyl-, n-Propyl-, Isopropyl-, n-Butyl-, Isobutyl-, n-Amyl-, Isoamyl- und n-Hexylformiat in diesem Siedebereich. Wegen ihrer hohen Flüchtigkeit sind Methylformiat und Ethylformiat besonders bevorzugt.

Gemische aus wenigstens 15 Gew.-% eines niederen Alkylformiats und bis zu 85 Gew.-% anderen flüchtigen, von Chlorkohlenwasserstoffen freien organischen Flüssigkeiten mit einem Siedepunkt nicht über 200°C haben verschiedene Vorteile gegenüber den Alkylformiaten allein. Während Methyl- und Ethylformiat allein zu Rißbildung führen können, vor allem beim Verkleben von Kunststoffteilen mit inneren Spannungen, ist diese Gefahr beim Einsatz ihrer Gemische mit Nitromethan und -ethan deutlich geringer. Bevorzugt sind Gemische aus 25 bis 75 Gew.-% Methyl- und/oder Ethylformiat und 75 bis 25 Gew.-% Nitromethan und/oder -ethan. Der Zusatz weiterer Lösungsmittel, wie Ketone oder Ester, z.B. Ethylacetat, kann vorteilhaft sein.

Durch Zusätze von 0,5 bis 10 Gew.-% an Alkoholen mit Siedepunkten zwischen 70 und 280°C lassen sich Verbesserungen in der Qualität der Klebnähte erzielen. Infolge geringerer Flüchtigkeit reichern sie sich während der Trocknung der Klebnaht vorübergehend an ihrer Oberfläche an. Dadurch werden Störungen der Oberfläche verhindert, die durch vorzeitige Hautbildung oder durch Kondensation von Wasser aus feuchter Umgebungsluft infolge der Verdunstungskälte entstehen können. Beispielsweise verhindert ein Zusatz von n-Butanol die Runzelbildung, ein Zusatz von Phenoxyethanol die Trübung der Klebnaht bei hoher Luftfeuchtigkeit.

### Kleblacke

sind Klebmittel mit einem Polymerisatgehalt, der nach dem Verdunsten der flüchtigen Komponenten in der Klebnaht zurückbleibt und die Verbindung zwischen den verklebten Teilen herstellt. Kleblacke sind vorteilhaft, wenn die Fügeteile nicht formschlüssig zusammenpassen und beim Kleben Abstände von z.B. 0,1 bis 1 mm zu überbrücken sind.

Wie jedes Klebharz muß das gelöste Polymerisat eine hinreichende Haftfähigkeit zum Material der Fügeteile und ausreichende innere Festigkeit haben. Diese Voraussetzungen werden am besten erfüllt, wenn das gelöste Polymerisat selbst ein Methacrylesterkunststoff, z.B. Polymethylmethacrylat ist. Thermoplastische Polymerisate sind bevorzugt. Weitere geeignete Klebharze sind Polyvinylacetat, Polyvinylether oder Celluloseacetobutyrat. Dem Polymerisatanteil ist durch die Viskosität der Lösung eine obere Grenze gesetzt. Die Lösungsviskosität bei 20°C soll im allgemeinen nicht über 10.000 mPa s liegen. Mit Vorteil werden etwa 3 bis 30 Gew.-% eines Polymerisats verwendet, das eine Viskosität der Lösung im Bereich von 500 bis 2000 mPa s ergibt.

### Verkleben von Methacrylesterkunststoffen

Die erfindungsgemäß zu verwendenden Klebmittel dienen in erster Linie dazu, Teile aus Methacrylesterkunststoffen miteinander oder mit Teilen aus anderen Kunststoffen, wie Polyvinychlorid, Polystyrol, Butadien-Styrol-Kunststoffen, ABS-Kunststoffen oder Celluloseestern (CAB), zu verkleben. Um Methacrylesterkunststoffe mit anderen Werkstoffen, wie Holz, Papier, Karton, Leder, Metall, keramisches Material, Glas, Porzellan, zu verkleben, werden vorzugsweise die erfindungsgemäßen Kleblacke verwendet.

Als Methacrylesterkunststoff kommt vor allem Acrylglas in Betracht. Man versteht darunter gegossenes, extrudiertes oder spritzgegossenes Polymethylmethacrylat bzw. Copolymerisate des Methylmethacrylats mit höchstens 10 Gew.-% an anderen äthylenisch ungesättigten, radikalisch polymerisierbaren Monomeren, insbesondere niederen Alkylacrylaten. Zu den Methacrylesterkunststoffen zählen auch Methylmethacrylat-Acrylnitril-Copolymerisate, Methylmethacrylat-Styrol-Maleinsäureanhydrid-Copolymerisate, schlagzäh modifiziertes Polymethylmethacrylat und ähnliche.

Zum Verkleben mit flüchtigen Klebmitteln werden die dicht zusammenpassenden Klebflächen mit dem Klebmittel benetzt und in der gewünschten Stellung zusammengefügt. Man kann auch das Klebmittel an den Rand der Berührungsfläche bringen, so daß es sich von selbst durch die Kapillarkraft in den Spalt zwischen den Fügeteilen hineinzieht. Bei Verwendung von Kleblacken genügt es, eine der zu verklebenden Kunststoffoberflächen in einer zur Füllung der Fuge ausreichenden Dicke zu beschichten und die Teile zusammenzufügen.

Die Anlösezeit, in der sich die Fügeteile ohne weiteres gegeneinander verschieben lassen, beträgt meistens etwa 30 bis 90 Sekunden. Danach ist eine ausreichende Standfestigkeit erreicht, um die Fügeteile auch ohne Arretierung in der gewünschten Stellung zu halten. Anschließend läßt man die Klebfuge, vorzugsweise unter leichtem Preßdruck, durch Verdunstung der flüchtigen Klebmittelbestandteile verfestigen. Nach einer Trocknungszeit von 1 bis 4 Stunden ist eine hohe Klebfestigkeit erreicht. Sie nimmt im Verlauf von 1 bis 2 Wochen oder bevorzugt durch Tempern während 2 bis 6 Stunden bei 60 bis 90 ^{o}C deutlich zu.

### Bestimmung der Klebfestigkeit

Die nachfolgende Tabelle enthält Zugscherfestigkeitswerte, die an verklebten Fügeteilen aus extrudiertem und aus gegossenem Acrylglas mit folgenden erfindungsgemäßen Klebmitteln ermittelt wurden:
A) Flüchtiges Klebmittel (Gew.-%), Viskosität 500-700 mPa s:
   44 % Ethylformiat, 44 % Nitroethan,
   4 % Phenoxyethanol, 3 % n-Butanol, 5 % Essigester;
B) Kleblack (Gew.-%), Viskosität 750-1000 mPa s:
   39 % Ethylformiat, 39 % Nitroethan,
   4 % Phenoxyethanol, 3 % n-Butanol, 5 % Essigester,
   10 % Polymethylmethacrylat.
Diesen Beispielen für die Erfindung werden bekannte Klebmittel C und D als Vergleich gegenübergestellt; ihre Zusammensetzungen sind:
C) Flüchtiges Klebmittel (Gew.-%): 52 % Dichlormethan,
   40 % Nitromethan, 5 % Phenoxyethanol, 3 % Ethanol
D) Kleblack (Gew.-%): 44 % Dichlormethan,
   36 % Nitromethan, 7 % Phenoxyethanol, 3 % Ethanol,
   10 % Polymethylmethacrylat.
Die Zugscherfestigkeit wird gemessen, indem eine 2 cm² große Klebfläche einer Zugbelastung in Richtung der Klebfläche ausgesetzt wird. Die erste Messung wird nach einer Trocknung bei Raumtemperatur in 5 Tagen, die zweite Messung nach Temperung über 5 Stunden bei 80°C vorgenommen.

| Verklebte Kunststoffe | Zugscherfestigkeit in MPa | |
|---|---|---|
| - Klebmittel | nach 5 Tagen | nach Tempern |
| Gegossenes Acrylglas (PLEXIGLAS GS) | | |
| - flüchtiges Klebmittel A | 31,3 | 42,3 |
| - Kleblack B | 31,0 | 46,0 |
| - flüchtiges Klebmittel C | 30,3 | 33,9 |
| - Kleblack D | 27,6 | 31,7 |

| Extrudiertes Acrylglas (PLEXIGLAS XT) | | |
|---|---|---|
| - flüchtiges Klebmittel | 39,3 | 51,6 |
| - Kleblack | 40,1 | 54,2 |
| - flüchtiges Klebmittel C | 37,9 | 43,2 |
| - Kleblack D | 34,9 | 43,6 |

### Verklebung unter Biegespannung

Zwei Streifen mit den Abmessungen 85 x 10 x 2 mm aus extrudiertem Acrylglas wurden flächig übereinandergelegt und an den Enden mit Bleiklebeband verbunden. Dann wurden die Streifen durch mittig zwischengesetzte Distanzstücke elastisch auseinandergespreizt, so daß sich ein gleichmäßiger Biegeradius von 500-600 mm ergab, was einer Biegespannung von 6 MPa entspricht. Die unter Biegespannung stehenden Streifen wurden mit den Kanten auf eine ebene Platte aus extrudiertem Acrylglas aufgeklebt. Nach der Trocknung wurde Riß- und Blasenbildung in der Klebfläche und an den konvexen Außenflächen beurteilt.

Zum Verkleben wurden das flüchtige Klebemittel A und der der Kleblack B gemäß der Erfindung, wie oben beschrieben, sowie zum Vergleich das flüssige Klebemittel C und der Kleblack D auf Basis Dichlormethan/Nitromethan verwendet. Befunde:
A : keine Risse in der Klebfläche,
   viele feine Risse am Rand, wenig Blasen
B : keine Risse in der Klebfläche,
   viele feine Risse im äußeren Klebrand
C : keine Risse in der Klebfläche,
   sehr feine, z.T. zugelöste Risse am Rand
D : keine Risse, viele Blasen.

## Patentansprüche

1. Verwendung eines niederen Alkylformiats als Klebmittel oder als Zusatz zu flüchtigen Klebmittelgemischen oder zu Kleblacken zum Verkleben von Teilen aus Methacrylesterkunststoffen untereinander oder mit anderen Kunststoffen.

2. Verwendung eines Gemisches aus wenigstens 15 Gew.-% eines niederen Alkylformiats und bis zu 85 Gew.-% anderer flüchtiger, von Chlorkohlenwasserstoffen freier organischer Flüssigkeiten mit einem Siedepunkt nicht über 200°C als Klebmittel oder Klebmittelzusatz gemäß Anspruch 1.

3. Verwendung eines niederen Alkylformiats als Klebmittel oder Klebmittelzusatz gemäß Anspruch 1 oder 2, dadurch gekennzeichnet, daß als Alkylformiat Methyl- und/oder Ethylformiat eingesetzt wird.

4. Verwendung eines Gemisches als Klebmittel oder Klebmittelzusatz gemäß Anspruch 2 oder 3, dadurch gekennzeichnet, daß als andere organische Flüssigkeit Nitromethan und/oder Nitroethan eingesetzt wird.

5. Verwendung eines niederen Alkylformiats oder eines Gemisches als Klebmittel oder Klebmittelzusatz gemäß einem oder mehreren der Ansprüche 1 bis 4, dadurch gekennzeichnet, daß es zusätzlich 0,5 bis 10 Gew.-% eines Alkohols mit einem Siedepunkt zwischen 70 und 280°C enthält.

6. Verwendung eines niederen Alkylformiats oder eines Gemisches als Klebmittel oder Klebmittelzusatz gemäß einem oder mehreren der Ansprüche 1 bis 5, dadurch gekennzeichnet, daß es ein gelöstes Polymerisat enthält und eine Lösungsviskosität von höchstens 10.000 mPa s bei 20°C hat.

7. Verwendung eines niederen Alkylformiats oder eines Gemisches gemäß einem oder mehreren der Ansprüche 1 bis 6 als Klebmittel oder Klebmittelzusatz zum Verkleben von Acrylglas.

8. Verwendung eines niederen Alkylformiats oder eines Gemisches als Klebmittel oder Klebmittelzusatz zum Verkleben von Acrylglas gemäß Anspruch 7, dadurch gekennzeichnet, daß extrudiertes Acrylglas verklebt wird.

## Claims

1. Use of a lower alkyl formate as an adhesive or as an additive for volatile adhesive mixtures or for adhesive varnishes for bonding methacrylate plastic parts to one another or to other plastic materials.

2. Use of a mixture as an adhesive or adhesive additive according to claim 1, the mixture comprising at least 15 wt.% of a lower alkyl formate and up to 85 wt.% of other volatile organic liquids free from chlorinated hydrocarbons and with a boiling point not exceeding 200°C.

3. Use of a lower alkyl formate as an adhesive or adhesive additive according to claim 1 or 2, characterised in that methyl and/or ethyl formate is used as the alkyl formate.

4. Use of a mixture as an adhesive or adhesive additive according to claim 2 or 3, characterised in that nitromethane and/or nitroethane is used as the other organic liquid.

5. Use of a lower alkyl formate or a mixture as an adhesive or adhesive additive according to one or more of claims 1 to 4, characterised in that additionally it comprises 0.5 to 10 wt.% of an alcohol with a boiling point between 70 and 280°C.

6. Use of a lower alkyl formate or a mixture as an adhesive or adhesive additive according to one or more of claims 1 to 5, characterised in that it comprises a dissolved polymer and has a solution viscosity of a maximum of 10,000 mPa s at 20°C.

7. Use of a lower alkyl formate or a mixture according to one or more of claims 1 to 6 as an adhesive or adhesive additive for bonding acrylic glass.

8. Use of a lower alkyl formate or a mixture as an adhesive or adhesive additive for bonding acrylic glass according to claim 7, characterised in that extruded acrylic glass is bonded.

## Revendications

1. Utilisation d'un formiate d'alkyle inférieur en tant qu'adhésif, ou en tant qu'additif pour des mélanges d'adhésifs volatils ou pour des vernis adhésifs, pour le collage de pièces en matière plastique à base d'ester méthacrylique entre elles ou avec d'autres matières plastiques.

2. Utilisation d'un mélange composé d'au moins 15 % en poids d'un formiate d'alkyle inférieur et de jusqu'à 85 % en poids d'autres liquides organiques volatils, exempts d'hydrocarbures chlorés, et ayant un point d'ébullition ne dépassant pas 200°C, en tant qu'adhésif ou additif pour adhésif selon la revendication 1.

3. Utilisation d'un formiate d'alkyle inférieur en tant qu'adhésif ou additif pour adhésif selon la revendication 1 ou 2, caractérisé en ce que l'on utilise le formiate de méthyle et/ou le formiate d'éthyle en tant que formiate d'alkyle.

4. Utilisation d'un mélange en tant qu'adhésif ou additif pour adhésif selon la revendication 2 ou 3, caractérisé en ce que l'on utilise du nitrométhane et/ou du nitroéthane en tant qu'autre liquide organique.

5. Utilisation d'un formiate d'alkyle inférieur ou d'un mélange en tant qu'adhésif ou additif pour adhésif selon une ou plusieurs des revendications 1 à 4, caractérisé en ce qu'il contient en outre 0,5 à 10 % en poids d'un alcool ayant un point d'ébullition entre 70 et 280°C.

6. Utilisation d'un formiate d'alkyle inférieur ou d'un mélange en tant qu'adhésif ou additif pour adhésif selon une ou plusieurs des revendications 1 à 5, caractérisé en ce qu'il contient un polymère dissous et a une viscosité en solution de 10 000 mPa.s au maximum à 20°C.

7. Utilisation d'un formiate d'alkyle inférieur ou d'un mélange selon une ou plusieurs des revendications 1 à 6 en tant qu'adhésif ou additif pour adhésif pour le collage de verre acrylique.

8. Utilisation d'un formiate d'alkyle inférieur ou d'un mélange en tant qu'adhésif ou additif pour adhésif pour le collage de verre acrylique selon la revendication 7, caractérisé en ce que l'on colle du verre acrylique extrudé.
